# EUROPÄISCHE PATENTSCHRIFT

(11) **EP 0 483 448 B1**
(45) Veröffentlichungstag und Bekanntmachung des Hinweises auf die Patenterteilung: **03.08.1994**
(21) Anmeldenummer: 91105822.0
(22) Anmeldetag: 12.04.1991
(51) Int. Cl.: F02D 11/10, B60K 26/04

(54) **Lastverstelleinrichtung**
Load control apparatus
Dispositif de réglage de charge

(30) Priorität: 31.10.1990 DE 4034575
(43) Veröffentlichungstag der Anmeldung: 06.05.1992
(73) Patentinhaber: VDO Adolf Schindling AG, D-60487 Frankfurt (DE)
(72) Erfinder: Hickmann, Gerd, W-6231 Schwalbach/Ts. (DE); Pfalzgraf, Manfred, W-6000 Frankfurt/Main (DE)
(74) Vertreter: Klein, Thomas, Dipl.-Ing. (FH)

(56) Entgegenhaltungen:
- EP-A- 0 300 153
- EP-A- 0 378 737
- EP-A- 0 389 649
- EP-A- 0 412 237

## Beschreibung

Die Erfindung bezieht sich auf eine Verstelleinrichtung für eine die Leistung einer Brennkraftmaschine bestimmende Drosselklappe gemäß Oberbegriff des Anspruchs 1.

Eine derartige Verstelleinrichtung ist aus der EP-A-0 389 649 bekannt. Bei dieser bekannten Verstelleinrichtung muß der Anschlagsteller 54 so stark ausgeführt werden, daß er in der Lage ist, die aus Sicherheitsgründen doppelt ausgeführte Hauptrückstellfeder 24 spannen zu können. Der Anschlag 56 definiert den Punkt maximaler Leerlaufleistung LLₘₐₓ. Der Stellmotor 42 kann auf die Drosselklappe nur in Schließrichtung einwirken und zwar zur Regelung der Leerlaufleistung, wenn der Mitnehmerarm 50 am Anschlag 56 anliegt bzw. zur Reduzierung der Motorleistung im übrigen Stellbereich, beispielsweise um das Durchdrehen der Antriebsräder zu vermeiden.

Bei der bekannten Verstelleinrichtung wird der fahrpedalseitige Regelbereich in Schließrichtung durch den Anschlagsteller 54 begrenzt. Der Regelbereich unterhalb dieser Position steht für die elektromotorische Leerlaufregelung zur Verfügung. Bei einem Defekt soll noch eine Notlaufposition definierbar sein, wobei jedoch nicht ersichtlich ist, wie die Notlaufposition realisierbar ist und ob dies auch bei einem Ausfall der Stromversorgung möglich ist.

Demgegenüber liegt der Erfindung die Aufgabe zugrunde, eine Verstelleinrichtung der eingangs genannten Art so weiterzubilden, daß eine sichere und genaue Regelung der Brennkraftmaschine über den gesamten Regelbereich mit möglichst geringen Stellkräften durchgeführt werden kann. Dabei sollen die Steuerelemente und Anschläge konstruktiv möglichst einfach gestaltet und leicht einstellbar sein.

Zur Lösung dieser Aufgabe wird vorgeschlagen, daß der Anschlag für den Mitnehmer eine bestimmte, unveränderliche Notlaufposition LLₙₒₜ zwischen einer Position für kleinste Leerlaufleistung LLₘᵢₙ und größte Leerlaufleistung LLₘₐₓ definiert und daß zwischen Mitnehmer und Steuerelement ein Stellhebel vorgesehen ist,
- der relativ zum Mitnehmer über eine durch Anschläge begrenzte Strecke bewegbar und über einen zweiten beweglichen Anschlag mittels einer zwischen Mitnehmer und Stellhebel wirkenden Notlauffeder in Schließrichtung der Drosselklappe vorgespannt ist,
- an dem der Anschlag für das Steuerelement ausgebildet und an den das Steuerelement über die Koppelfeder angekoppelt ist und
- dessen Stellweg in Schließrichtung der Drosselklappe durch einen dritten verstellbaren Anschlag begrenzt ist.

Vorteilhafte Weiterbildungen des Erfindungsgedankens sind in den Ansprüchen 2 und 3 beschrieben.

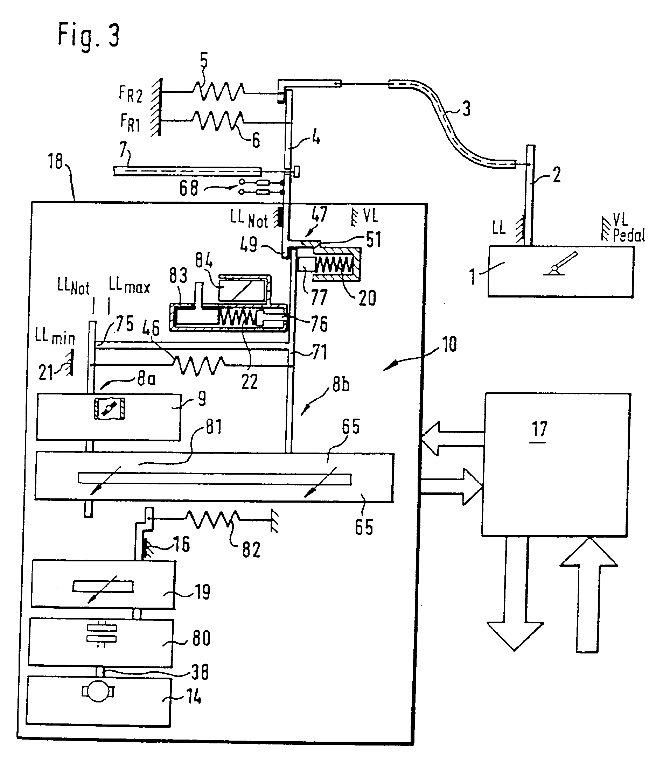

Durch die Anordnung des Stellhebels 71 zwischen dem Mitnehmer 4 und dem Stellelement 8a kann ein verstellbarer Anschlag 76 realisiert werden, der nicht mehr gegen die Hauptrückstellfeder 6 verstellt werden muß, sondern nur noch gegen die Notlauffeder 20, die in Schließrichtung der Drosselklappe wirkt, und der bei Ausfall des Stellmagneten 84 für eine definierte Notlaufposition sorgt. Diese kann entweder durch den Anschlag 49 in Verbindung mit dem Anschlag LLₙₒₜ für den Mitnehmer 4 realisiert werden oder durch das den beweglichen Anschlag 76 umgebende Gehäuse (Fig. 3).

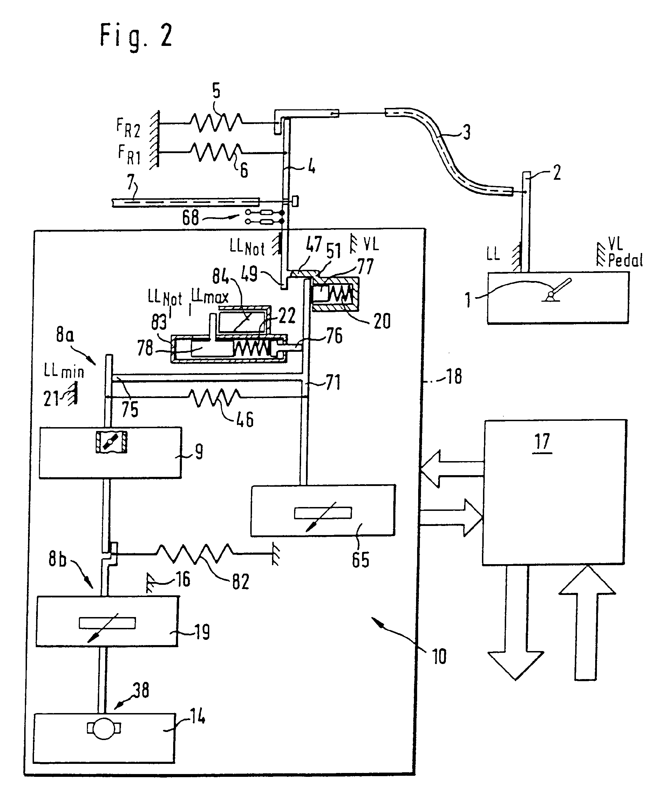

Die gegeneinanderwirkenden Federn 20 und 22 und der Stellweg des Widerlagers 78 sind zu diesem Zweck so aufeinander abgestimmt, daß die Feder 22 stärker ist als die Feder 20, wenn der Stellmagnet 84 eingeschaltet ist und das Widerlager 78 in Öffnungsrichtung der Drosselklappe verschoben ist, wobei die Feder 22 über die entsprechende Wegstrecke vorgespannt ist (Fig. 2). In der anderen Position des Widerlagers 78, d. h. wenn der Stellmagnet 84 unbestromt ist, ist dagegen die Feder 20 stärker als die Feder 22, so daß der Anschlag 76 die in Fig. 3 dargestellte Position einnimmt. Die Erfindung ermöglicht die Realisierung einer genau definierten Notlaufposition der Drosselklappe für den Fall, daß die elektronische Regeleinrichtung 7 defekt ist oder daß die Stromversorgung für die Stellglieder ausfällt. Als größter Vorteil der vorgeschlagenen Lösung wird angesehen, daß die Verstellung des Leerlaufanschlags nicht gegen die Kraft der Hauptrückstellfeder erfolgen muß. Im übrigen handelt es sich nicht um einen verstellbaren Leerlaufanschlag in dem Sinne, daß er innerhalb eines gegebenen Bereichs jede beliebige Position einnehmen könnte. Der Anschlag 76 ist nur in dem Sinne verstellbar, daß er unter normalen Bedingungen für den Stellhebel 71 eine LLₘₐₓ Position definiert und daß er bei Störungen eine Notlaufposition einnimmt, der eine definierte Drosselklappenstellung unterhalb der LLₘₐₓ Position entspricht.

Weitere Einzelheiten werden anhand der in den Figuren 1 bis 3 dargstellten Ausführungsbeispielen näher erläutert. Es zeigen:
- Figur 1: ein Blockschaltbild zur Verdeutlichung der prinzipiellen Funktion einer Lastverstelleinrichtung,
- Figur 2: ein Ausführungsbeispiel einer Lastverstelleinrichtung mit einem verstellbaren Anschlag im bestromten Zustand,
- Figur 3: ein anderes Ausführungsbeispiel einer Lastverstelleinrichtung mit einem verstellbaren Anschlag im stromlosen Zustand.

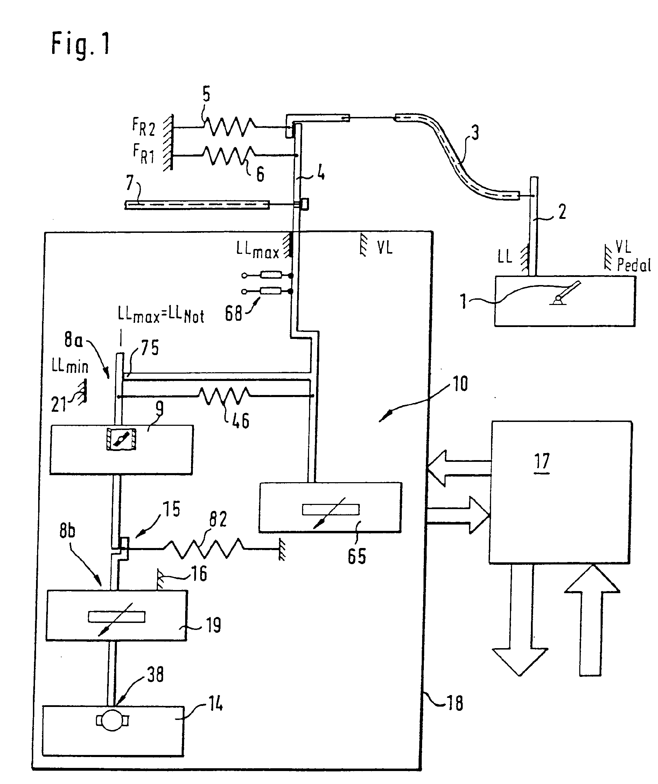

Die in dem Rahmen 18 dargestellten Teile gemäß Figur 1 bilden ein Stellglied bzw. eine Lastverstelleinrichtung 10, die in einer Baueinheit zusammengefaßt sind. Zu der Lastverstelleinrichtung 10 gehört ein Stellmotor bzw. Elektromotor 14, der über ein in der Zeichnung der Einfachheit halber nicht dargestelltes Getriebe mit einer Drosselklappenwelle für eine Drosselklappe 9 antriebsmäßig verbunden ist. Über den Elektromotor 14 werden die Stellkräfte des Elektromotors 14 zur Drosselklappe 9 übertragen, und dadurch wird eine Verstellung in die gewünschte Position herbeigeführt.

Wie aus Figur 1 hervorgeht, kann die Lastverstelleinrichtung 10 über ein Fahrpedal 1 verstellt werden, wobei durch Betätigung des Fahrpedals 1 ein Hebel 2 zwischen einem Leerlaufanschlag (LL) und einem Vollastanschlag (VL) verschoben und über eine Rückzugfeder 5 in Leerlaufrichtung (LL) vorgespannt wird. Das Fahrpedal 1 ist mittels eines Gaszugs 3 an einen Mitnehmer 4 angeschlossen, so daß bei Betätigung des Fahrpedals 1 der Mitnehmer 4 in Richtung des Vollastanschlags (VL) verschoben wird. An den Mitnehmer 4 ist eine Rückstellfeder 6 angeschlossen, die den Mitnehmer 4 in Leerlaufrichtung (LL) vorspannt. Der Mitnehmer 4 kann einen Automatikzug 7 eines nicht dargestellten Getriebes vorspannen. Solange der Gaszug 3 nicht beaufschlagt wird, liegt der Mitnehmer 4 an dem ihm zugeordneten Leerlaufanschlag (LLₘₐₓ) an (vergl.Figur 1).

Der Mitnehmer 4 wirkt über eine Feder, insbesondere eine Koppelfeder 46, mit einem Steuerelement 8a zusammen, das der in der Zeichnung nicht dargestellten Drosselklappenwelle entspricht. Mittels des Mitnehmers 4 wird sichergestellt, daß das Steuerelement 8a gegen einen am Mitnehmer 4 angordneten ersten Anschlag 75 zur Anlage gebracht wird, wenn über eine Regeleinrichtung 17 ein Elektromotor 14 nicht auf das Steuerelement 8a in Leerlaufrichtung (LLₘᵢₙ) verstellend einwirkt.

Im Leerlaufregelbereich liegt der Mitnehmer 4 gegen den Leerlaufanschlag (LLₘₐₓ) an und wird, solange der Fahrer das Fahrpedal 1 nicht betätigt, mittels der Rückstellfeder 6 in dieser Stellung gehalten. Ferner sorgt die Feder 46 dafür, daß das Steuerelement 8a gegen den Anschlag 75 des Mitnehmers gezogen wird.

Die Lastverstelleinrichtung weist neben dem ersten Steuerelement 8a ein zweites Steuerelement 8b auf, das mit einem Elektromotor 14 antriebsverbunden ist. Um die beiden Steuerelemente 8a,8b mechanisch miteinander zu kuppeln, weist das zweite Steuerelement 8b einen Mitnehmer 15 auf, der eine Verstellung des ersten Steuerelements 8a nur in Leerlaufrichtung (LLₘᵢₙ) ermöglicht, das heißt, der Elektromotor 14 kann nur leistungsreduzierend auf das Stellglied einwirken.

An das Steuerelement 8b ist einenends eine Zugfeder 82 angeschlossen, die anderenends an einen ortsfesten Punkt im Gehäuse der Lastverstelleinrichtung 10 angeschlossen ist. Die Zugfeder 82 bewirkt eine Verstellung des Steuerelements 8b in Richtung der Leerlaufposition (LLₘₐₓ), wenn das Stellglied nicht bestromt bzw. der Elektromotor 14 abgeschaltet ist.

Wie aus Figur 1 hervorgeht, wird der Stellweg des zweiten Steuerelements 8b und dadurch auch der Stellweg des ersten Steuerelements 8a durch einen in Richtung der maximalen Leerlaufstellung in den Stellweg des zweiten Steuerlements 8b ragenden Anschlag 16 auf der Höhe der Position LLₘₐₓ begrenzt.

Eine Begrenzung des ersten Steuerelements 8a in der Position der minimalen Leerlaufstellung (LLₘᵢₙ) erfolgt durch einen zweiten, in den Stellweg des ersten Steuerelements 8a ragenden Anschlag 21.

In Figur 1 ist die elektronische Regeleinrichtung 17, die Aufbereitungs-, Logik- und Regelschaltungen enthält, schematisch angedeutet. In ihrem Digitalteil speichert die Regeleinrichtung 17 Werte für die Fahrzeuganpassung und verarbeitet die digitalen oder digitalisierten Werte verschiedener Eingangsgrößen, die dann die gewünschte Stellung der Drosselklappe 9 über ein Analogteil regeln. Mit der elektronischen Regeleinrichtung 17 wirkt die eine zu den Steuerelementen 8a,8b gehörende Istwerterfassungseinrichtung 19 für den Antrieb sowie eine dem Mitnehmer 4 zugeordnete, die jeweilige Position des Mitnehmers 4 ermittelnde Sollwerterfassungseinrichtung 65 zusammen.

Der ersten Istwerterfassungseinrichtung 19 ist ein in der Zeichnung nicht dargestellter Potentiometer und der Sollwerterfassungseinrichtung 65 ein zweiter ebenfalls in der Zeichnung nicht dargestellter Potentiometer zugeordnet.

Die Regeleinrichtung 17 hat die Aufgabe, alle eingegebenen Signale, z.B. Geschwindigkeit, mittels der Potentiometer zu erfassen und miteinander zu vergleichen. Weicht beispielsweise die Fahrgeschwindigkeit vom gesetzten Sollwert ab, so wird das Stellglied so lange angesteuert, bis die vorgegebene Geschwindigkeit erreicht ist.

Von der elektronischen Regeleinrichtung 17 werden darüberhinaus über einen Leerlaufkontakt 68 (Figur 2), der von dem Mitnehmer 4 aktiviert wird, Signale erfaßt, wenn dieser an dem ihm zugeordneten Leerlaufanschlag (LLₘₐₓ) zur Anlage kommt.

Die elektronische Regeleinrichtung 17 dient im Zusammenwirken mit der Istwerterfassungseinrichtung 19 und den externen Bezugsgrößen dem Zweck, eine Sicherheitslogik betreffend der Steuerung des ersten und zweiten Steuerelements 8a,8b aufzubauen. Sobald die elektronische Regeleinrichtung 17 oder der Elektromotor 14 nicht mehr einwandfrei funktionieren, wird durch die in Richtung der maximalen Leerlaufstellung vorgespannte Rückstellfeder 6 die Drosselklappe 9 in die Leerlaufₙₒₜ-Stellung (LLₘₐₓ) bewegt, die gleichzeitig einer Leerlaufₙₒₜ-Position entspricht.

Mit der Lastverstelleinrichtung kann über den gesamten Leerlaufbereich mittels eines einzigen Stellglieds eine Regelung nach oben (LLₘₐₓ) und nach unten (LLₘᵢₙ) erfolgen. Ferner ist es möglich, mittels des Elektromotors 14 außerhalb des Leerlaufregelbereichs im Antischlupfregelfall (ASR) ein Abregeln der Brennkraftmaschine in Richtung der Leerlaufposition (LLₘₐₓ) sicherzustellen, da der Elektromotor 14 nur leistungsreduzierend auf das Stellglied einwirkt.

In Figur 2 ist ein Ausführungsbeispiel einer Lastverstelleinrichtung 10 veranschaulicht, die neben dem Mitnehmer 4 einen Stellhebel 71 aufweist, an dem der erste verstellbare Anschlag 75 angeordnet ist. Ein weiterer verstellbarer Anschlag 76 ist in einem Zylinder 83 eines Stellmagneten 84 aufgenommen. Zwischen dem Stellmagneten 84 und dem verstellbaren Anschlag 76 ist eine Druckfeder 22 angeordnet, die über den Stellmagneten 84 vorspannbar ist und den zweiten Anschlag 76 gegen den Stellhebel 71 und somit auch gegen einen dritten Anschlag 77 drückt.

Der Stellhebel 71 ist zwischen zwei mit Abstand zueinander angeordneten Mitnehmern 49,51 verstellbar angeordnet, die einen Freilaufhaken 47 bilden, der fest mit dem Mitnehmer 4 verbunden ist. Im stromlosen Zustand, bzw. bei Ausfall der Regeleinrichtung 17, wird der Stellhebel 71 mittels einer Notlauffeder 20 und mittels des mit dieser zusammenwirkenden dritten Anschlags 77 gegen den ersten Mitnehmer 49 in Richtung der Leerlaufₘᵢₙ-Position verstellt, so daß das Steuerelement 8a über den ersten verstellbaren Anschlag 75 in die LeerlaufₙₒₜPosition (LLₙₒₜ) verstellt wird.

Wird das Stellglied bestromt und somit der Stellmagnet 84 angezogen, so wird die Feder 22 stärker vorgespannt und verstellt über den zweiten verstellbaren Anschlag 76 gegen die Wirkung der etwas schwächeren Notlauffeder 20 den ersten Stellhebel 71 in Richtung Vollastbetrieb (VL), wobei der erste Stellhebel 71 im Freilaufhaken 47 gegen den zweiten Mitnehmer 51 zur Anlage kommt. Gibt der Fahrer aus dieser Position heraus Gas, so braucht nun der Stellhebel 71 keinen Totweg zu durchfahren, so daß bei Betätigung des Fahrpedals 1 die Drosselklappe 9 ohne Verzögerung sofort verstellt werden kann.

Bei einer Verstellung des Fahrpedals 1 erkennt die dem ersten Stellhebel 71 zugeordnete Sollwerterfassungseinrichtung 65 die jeweilige Position des Stellhebels 71 und vergleicht diesen Wert mit einer der Drosselklappe 9 zugeordneten Istwerterfassungseinrichtung 19, so daß nun über die Regeleinrichtung 17, der die Meßdaten zugeleitet werden, der Elektromotor 14 so lange angesteuert wird, bis die Drosselklappe 9 die gewünschte Position erreicht hat.

Tritt ein Antischlupfregelfall (ARS) auf, so erfolgt mittels des ersten Elektromotors 14 ein Abregeln der Brennkraftmaschine, wobei die Regeleinrichtung 17 die entsprechende Störgröße erfaßt, verarbeitet und dadurch den Elektromotor 14 entsprechend ansteuert, bis dieser die Drosselklappe 9 auf den erforderlichen Wert eingestellt hat. Aus den Figuren 1 bis 3 geht hervor, daß der Elektromotor 14 nur reduzierend auf den Antrieb der Drosselklappe 9 einwirken kann. Hierdurch wird die Betriebssicherheit erhöht, da sichergestellt wird, daß im ASR-Regelfall kein Aufregeln der Brennkraftmaschine möglich ist, weil das Steuerelement 8b die Drosselklappenwelle nicht in Richtung Öffnen drehen kann.

In Figur 3 ist ein anderes Ausführungsbeispiel dargestellt, das nur geringfügig von dem in der Figur 2 dargestellten Ausführungsbeispiel abweicht.

Wie aus Figur 3 hervorgeht, ist neben der Istwerterfassungseinrichtung 19 zur Ermittlung der Stellung des Antriebs eine weitere Istwerterfassungseinrichtung 81 zur Erfassung der Stellung der Drosselklappe 9 vorgesehen, so daß von der Regeleinrichtung 17 beide Betriebszustände erfaßt und mit dem Sollwert verglichen werden können, um dadurch eine noch exaktere Ansteuerung des Elektromotors 14 zu gewährleisten bzw. das Regelverhalten des Stellglieds zu verbessern.

Wie aus Figur 3 ferner hervorgeht, ist der Elektromotor 14 über eine Kupplung 80 an die Drosselklappenwelle ankuppelbar, die in Figur 3 durch das Steuerelement 8b veranschaulicht ist, so daß eine Antriebsverbindung zwischen der Abtriebswelle 38 des Elektromotors 14 und der Drosselklappenwelle in Leerlaufrichtung hergestellt wird. Hierdurch wird auf vorteilhafte Weise erreicht, daß bei Abschaltung des Elektromotors 14 infolge einer Störgröße der Elektromotor 14 nicht leer mitzulaufen braucht, so daß die einzelnen Federn nicht so stark dimensioniert werden müssen, da diese bei abgekuppeltem Elektromotor 14 nur die im System vorhandenen Reibungswiderstände und die auf die Drosselklappe 9 einwirkenden Unterdruckkräfte zu überwinden braucht. Hierdurch kann insgesamt das Stellglied kostengünstiger hergestellt werden.

### Bezugszeichenliste

- 1: Fahrpedal
- 2: Hebel
- 3: Gaszug
- 4: Mitnehmer
- 5: Rückzugfeder
- 6: Rückstellfeder
- 7: Automatikzug
- 8a: Steuerelement
- 8b: Steuerelement
- 9: Drosselklappe
- 10: Lastverstelleinrichtung
- 14: Elektromotor
- 15: Mitnehmer
- 16: Anschlag
- 17: elektr. Regeleinrichtung
- 18: Rahmen
- 19: Istwerterfassungseinrichtung
- 20: Notlauffeder
- 21: Anschlag
- 22: Feder
- 38: Abtriebswelle
- 46: Feder (Koppelfeder)
- 47: Freilaufhaken
- 49: Mitnehmer
- 51: Mitnehmer
- 65: Sollwerterfassungseinrichtung
- 68: Leerlaufkontakt
- 71: Stellhebel
- 75: Anschlag
- 76: Anschlag
- 77: Anschlag
- 80: Kupplung
- 81: Iswerterfassungseinrichtung
- 82: Zugfeder
- 83: Zylinder
- 84: Stellmagnet

## Patentansprüche

1. Verstelleinrichtung für eine die Leistung einer Brennkraftmaschine bestimmende Drosselklappe (9), die mit einer im Drosselklappengehäuse gelagerten Drosselklappenwelle und einem ersten Steuerelement (8a) drehfest verbunden ist, wobei das Steuerelement (8a)
a) mittels einer Koppelfeder (46) gegen den Anschlag (75) eines Mitnehmers (4) in Öffnungsrichtung der Drosselklappe (9) vorgespannt ist und der Mitnehmer (4) gegen die Kraft einer Rückstellfeder (6) von einem Fahrpedal (1) in Öffnungsrichtung der Drosselklappe (9) verstellbar ist und
b) mittels eines Elektromotors (14), der von einer elektronischen Regeleinrichtung (17) ansteuerbar ist, gegen die Kraft einer zweiten Rückstellfeder (82) in Schließrichtung der Drosselklappe (9) mitnehmbar ist, wobei
c) der Stellweg des Mitnehmers (4) in Schließrichtung der Drosselklappe (9) durch einen ersten Anschlag begrenzt ist, dadurch gekennzeichnet, daß der Anschlag für den Mitnehmer (4) eine bestimmte, unveränderliche Notlaufposition LLₙₒₜ zwischen einer Position für kleinste Leerlaufleistung LLₘᵢₙ und größte Leerlaufleistung LLₘₐₓ definiert und daß zwischen Mitnehmer (4) und Steuerelement (8a) ein Stellhebel (71) vorgesehen ist,
- der relativ zum Mitnehmer (4) über eine durch Anschläge (49, 51) begrenzte Strecke (47) bewegbar und über einen zweiten beweglichen Anschlag (77) mittels einer zwischen Mitnehmer (4) und Stellhebel (71) wirkenden Notlauffeder (20) in Schließrichtung der Drosselklappe vorgespannt ist,
- an dem der Anschlag (75) für das Steuerelement (8a) ausgebildet und an den das Steuerelement (8a) über die Koppelfeder (46) angekoppelt ist und
- dessen Stellweg in Schließrichtung der Drosselklappe (9) durch einen dritten verstellbaren Anschlag (76) begrenzt ist.

2. Verstelleinrichtung nach Anspruch 1, dadurch gekennzeichnet, daß der dritte verstellbare Anschlag (76) von einer Feder (22) in Öffnungsrichtung der Drosselklappe (9) vorgespannt ist und daß sich die Feder (22) auf der dem dritten Anschlag (76) abgewandten Seite auf einem Widerlager (78) abstützt, das mittels eines Stellmagneten (84) aus einer festen Endposition unter Spannung der Feder (22) in eine gegenüber der Endposition in Öffnungsrichtung der Drosselklappe (9) versetzte Position bewegbar ist.

3. Verstelleinrichtung nach Anspruch 2, dadurch gekennzeichnet, daß der Stellhebel (71) unter dem Einfluß der Notlauffeder (22) und der entgegenwirkenden, durch den Stellmagneten (84) in ihrer Wirkung veränderbaren Feder (20) eine Position für maximale Leerlaufleistung LLₘₐₓ einnimmt, wenn der Stellmagnet (84) bestromt ist, bzw. eine demgegenüber in Schließrichtung der Drosselklappe (9) verschobene Notlaufposition LLₙₒₜ einnimmt, wenn der Stellmagnet (84) unbestromt ist.

## Claims

1. An adjusting device for a throttle valve (9) which determines the output of an internal combustion engine and which is attached rotationally fixed to a throttle valve spindle mounted in the throttle valve housing and to a first control element part (8a), wherein the control element (8a)
a) is biassed by means of a coupling spring (46) in the direction of opening of the throttle valve (9) towards the stop (75) of a carrier (4), and the carrier (4) can be adjusted in the direction of opening of the throttle valve (9) against the force of a pull-back spring (6) by an accelerator pedal (1), and
b) can be entrained in the direction of closing of the throttle valve (9) against the force of a second pull-back spring (82) by means of an electric motor (14), which can be operated by an electronic controller (17), wherein
c) the path of adjustment of the carrier (4) in the direction of closing of the throttle valve (9) is limited by a first stop,
characterised in that the stop defines a given, invariable emergency-running position LLₙₒₜ for the carrier (4) between a position for the lowest idle-running output LLₘᵢₙ and a position for the highest idle-running output LLₘₐₓ and that an adjusting lever (71) is provided between the carrier (4) and the control element (8a),
- which adjusting lever is movable in relation to the carrier (4) over a section (47) limited by stops (49, 51) and is biassed in the direction of closing of the throttle valve via a second, movable stop (77) by means of an emergency-running spring (20) acting between the carrier (4) and the adjusting lever (71),
- on which adjusting lever the stop (75) for the control element (8a) is constructed and to which the control element (8a) is coupled via the coupling spring (46), and
- the path of adjustment of which adjusting lever in the direction of closing of the throttle valve (9) is limited by a third adjustable stop (76).

2. An adjusting device according to claim 1, characterised in that the third adjustable stop (76) is biassed in the direction of opening of the throttle valve (9) by a spring (22), and that the spring (22) is supported on an abutment (78) on its side remote from the third stop (76), which abutment can be moved by means of an adjusting magnet (84) from a fixed end position, with the spring (22) being stressed, into a position which is displaced in the direction of opening of the throttle valve (9) in relation to the end position.

3. An adjusting device according to claim 2, characterised in that the adjusting lever (71) adopts a position for maximum idle-running output LLₘₐₓ under the influence of the emergency-running spring (22) and of the spring (20) acting in opposition, the action of which can be varied by the adjusting magnet (84), when the adjusting magnet (84) is supplied with current, and adopts an emergency-running position LLₙₒₜ which is displaced in relation to the former position in the direction of closing of the throttle valve (9) when the adjusting magnet (84) is not supplied with current.

## Revendications

1. Dispositif de réglage d'un papillon étrangleur (9), qui détermine la puissance d'un moteur à combustion interne et qui est solidaire en rotation d'un axe tourillonné dans le corps de ce papillon et d'un premier élément de manoeuvre (8a), ce premier élément (8a)
a) étant sollicité dans le sens de l'ouverture du papillon (9), au moyen d'un ressort d'accouplement (46) vers une butée (75) d'un levier entraîneur (4), cet entraîneur (4) pouvant être déplacé dans le sens de l'ouverture du papillon (9) par une pédale d'accélérateur (1), contre l'action d'un ressort de rappel (6),
b) pouvant être entraîné au moyen d'un moteur électrique (14), qui est commandé par un circuit électronique (17) de réglage, dans le sens de la fermeture du papillon (9), contre l'action d'un second ressort de rappel (82),
c) la course de l'entraîneur (4) dans le sens de la fermeture du papillon (9) étant limitée par une première butée,
dispositif de réglage caractérisé en ce que
la butée de l'entraîneur (4) fixe une position déterminée et invariable LLₙₒₜ de secours entre une position LLₘₐₓ de puissance maximale au ralenti et une position LLₘᵢₙ de puissance minimale au ralenti, et il est disposé entre l'entraîneur (4) et l'élément de manoeuvre (8a), un levier de réglage (71),
qui peut être déplacé par rapport à l'entraîneur (4) sur un trajet (47) limité par des butées (49, 51) et est sollicité, dans le sens de la fermeture du papillon (9), par l'entremise d'une seconde butée (77) mobile, au moyen d'un ressort de secours (20) agissant entre l'entraîneur (4) et ce levier (71),
sur lequel la butée (75) de l'élément de manoeuvre (8a) est formée et auquel cet élément de manoeuvre (8a) est relié au moyen d'un ressort d'accouplement (46) et
dont la course de réglage dans le sens de la fermeture du papillon (9) est limitée par une troisième butée réglable (76).

2. Dispositif de réglage selon la revendication 1, caractérisé en ce que la troisième butée réglable (76) est sollicitée par un ressort (22) dans le sens de l'ouverture du papillon (9), ce ressort (22) s'appuyant, du côté opposé à cette butée (76), contre un contre-appui (78), qui peut être déplacé au moyen d'un électro-aimant (84), en bandant le ressort (22), d'une position initiale fixe à une position décalée de cette position initiale dans le sens de l'ouverture du papillon.

3. Dispositif de réglage selon la revendication 2, caractérisé en ce que le levier (71) de réglage prend, sous l'influence d'un ressort de secours (22) et du ressort antagoniste (20) dont la puissance peut être modifiée par l'électro-aimant (84), une position (LLₘₐₓ) de puissance maximale au ralenti, lorsque cet électro-aimant (84) est excité, ou au contraire une position (LLₙₒₜ) de secours décalée dans le sens de la fermeture du papillon (9), quand cet électro-aimant (84) n'est pas excité.
